# EUROPÄISCHE PATENTANMELDUNG

(11) **EP 0 899 083 A2**
(43) Veröffentlichungstag der Anmeldung: **03.03.1999**
(21) Anmeldenummer: 98810632.4
(22) Anmeldetag: 06.07.1998
(51) Int. Cl.: B29C 65/02

(54) **Vorrichtung und Verfahren zum Verschweissen von Kunststoffteilen**

(30) Priorität: 01.09.1997 DE 19738088
(71) Anmelder: Georg Fischer Rohrleitungssysteme AG, CH-8201 Schaffhausen (CH)
(72) Erfinder: Wermelinger Jörg, 8200 Schaffhausen (CH)
(74) Vertreter: Rottmann, Maximilian R.

(57) **Zusammenfassung**

Es wird eine Vorrichtung (1) und ein Verfahren zum Verschweissen von Teilen aus thermoplastischem Kunststoff mittels eines Stumpfschweissverfahrens vorgeschlagen, wobei die Teile in koaxialer Lage zueinander mittels Spannvorrichtungen gehalten werden, und mittels einer Heizvorrichtung, die zwischen die Teile bringbar ist, aufgeheizt werden. Zur Ermittlung der Festigkeit der Schweisszone wird die Umgebungstemperatur berücksichtigt. Dazu ist ein an der Vorrichtung (1) angeordneter Temperatursensor (5, 5a) vorgesehen, welcher gegenüber der Vorrichtung (1) thermisch isoliert ist

## Beschreibung

Die vorliegende Erfindung betrifft eine Vorrichtung zum Verschweissen von Teilen aus thermoplastischem Kunststoff nach dem Oberbegriff des Anspruchs 1 sowie ein Verfahren zum Verschweissen von Teilen aus thermoplastischem Kunststoff nach dem Oberbegriff des Anspruchs 7.

Vorrichtungen und Verfahren dieser Art sind auch unter dem Namen bzw. dem Stichwort ,,Heizelement-Stu mpfschweissen" bekannt. Dabei erfolgt der Schweissvorgang in zwei zeitlich voneinander getrennten Phasen, nämlich in einem Aufheiz- und einem Fügevorgang.

Den meisten bisher bekannten Vorrichtungen zum Verschweissen von thermoplastischen Kunststoffteilen, insbesondere Kunststoffrohren, ist gemeinsam, dass zur Überwachung des Schweissvorgangs der Fügedruck während der Abkühlzeit kontrolliert wird. Dieser Ablauf wird in einem Weg-Druck-Kraft-Zeitverlauf-Diagramm erfasst. Es galt bisher als gesichert, dass eine derart kontrollierte Prozessführung für die Schweissqualität entscheidend ist.

Es wurde nun in zahlreichen Untersuchungen festgestellt, dass für eine qualitativ hochwertige und reproduzierbare Schweissung auch andere Einflussgrössen entscheidend sind.

Aus der WO 95/11124 ist eine Stumpfschweissmaschine zum Verschweissen von Rohrenden bekannt, bei welcher die zu verschweissenden Teile durch eine Spannvorrichtung in koaxialer Lage zueinander gehalten werden. Die Vorrichtung weist u.a. einen Sensor zum Messen der Umgebungstemperatur, einen Zeitgeber sowie einen linearen Messumformer auf. Zur Überwachung des Füge- und Abkühlvorgangs wird vorgeschlagen, aufgrund der gemessenen Umgebungstemperatur eine vorbestimmte Abkühl-Zeitspanne festzulegen. Definitionsgemäss muss diese festgelegte Zeitspanne verstreichen, bevor die verschweissten Teile soweit abgekühlt sind, dass die Schweissnaht eine genügende Festigkeit aufweist und die Teile aus der Spannvorrichtung entfernt werden können. Der für die Zeitdauer des Abkühlvorgangs massgebende Zeitgeber wird gestartet, nachdem mit Hilfe des linearen Messumformers festgestellt wurde, dass die Rohrenden sich um einen bestimmten Betrag gegeneinander verschoben haben. Anhand dieser Relativverschiebung soll sichergestellt werden, dass eine gegenseitige Durchdringung der Rohrenden stattgefunden hat und eine wirksame Verschweissung sichergestellt ist. Obwohl bei diesem Verfahren die Umgebungstemperatur zur Ermittlung des Erreichens der Festigkeit der verschweissten Teile herangezogen werden soll, ist nicht näher spezifiziert, wie und wo der Sensor angeordnet werden soll, damit die Umgebungstemperatur möglichst genau erfasst werden kann.

Ausgehend vom bekannten Stand der Technik und den neu gewonnenen Erkenntnissen, ist es Aufgabe der Erfindung, eine Vorrichtung zum Verschweissen von Teilen aus thermoplastischem Kunststoff vorzuschlagen, mittels welcher die Umgebungstemperatur möglichst genau gemessen werden kann, damit die Abkühlzeit optimiert werden kann.

Erfindungsgemäss wird diese Aufgabe durch die kennzeichnenden Merkmale des Anspruches 1 gelöst.

Vorteilhafte Ausgestaltungen der Vorrichtung gehen aus den abhängigen Ansprüchen 2 bis 6 hervor.

Im Anspruch 7 wird zudem ein Verfahren zum Verschweissen von Teilen aus thermoplastischem Kunststoff beansprucht, bei dem eine erfindungsgemäss gestaltete Vorrichtung zum Einsatz kommt.

Bevorzugte Verfahrensschritte gehen aus den abhängigen Ansprüchen 7 bis 11 hervor.

An Hand der beiliegenden Zeichnungen wird ein bevorzugtes Ausführungsbeispiel der Erfindung näher beschrieben und erläutert.

Es zeigt:
Fig. 1 einen schematischen Querschnitt durch erfindungsgemässe Vorrichtung;
Fig. 2 einen an einem Zwischenelement angeordneten Temperatursensor; und
Fig. 3 ein Temperatur-Zeit-Abkühlungsdiagramm.

Bekannte Vorrichtungen zum Verschweissen von thermoplastischen Kunststoffrohren kontrollieren in der Regel den Fügedruck während der Abkühlphase. Allerdings wurde zwischenzeitlich erkannt, dass das eigentliche Kriterium für das Ende der Abkühlung die Festigkeit der Schweisszone ist. Die Festigkeit ist aber nicht direkt abhängig von der Zeit, sondern von der Temperatur des zu verschweissenden Materials. Bei einer Umgebungstemperatur von 40° C liegt die Materialtemperatur in der Schweisszone am Ende einer fixen Abkühlungszeit mehr als 30° C höher als bei einem Schweissvorgang unter identischen Bedingungen, der aber bei bei 5°C Raumtemperatur durchgeführt wurde.

Daher wird im Rahmen der vorliegenden Erfindung davon ausgegangen, die Umgebungstemperatur mittels eines Sensors zu erfassen; durch ein genaues Erfassen der Umgebungstemperatur kann dann die Abkühlzeit so gesteuert werden, dass die notwendige Materialfestigkeit in der Schweisszone sichergestellt ist.

Allerdings besteht die Gefahr, dass bei ungünstiger Platzierung des Temperatursensors eine falsche Umgebungstemperatur gemessen wird. Die Platzierung des Sensors ist insofern wichtig, da sich einerseits die gesamte Vorrichtung erwärmt und andererseits die Gefahr besteht, dass der Sensor von der Heizeinrichtung in unerwünschter Weise erwärmt wird. Schliesslich besteht eine weitere Gefahr darin, dass der Sensor über seine Anschlussleitungen erwärmt wird.

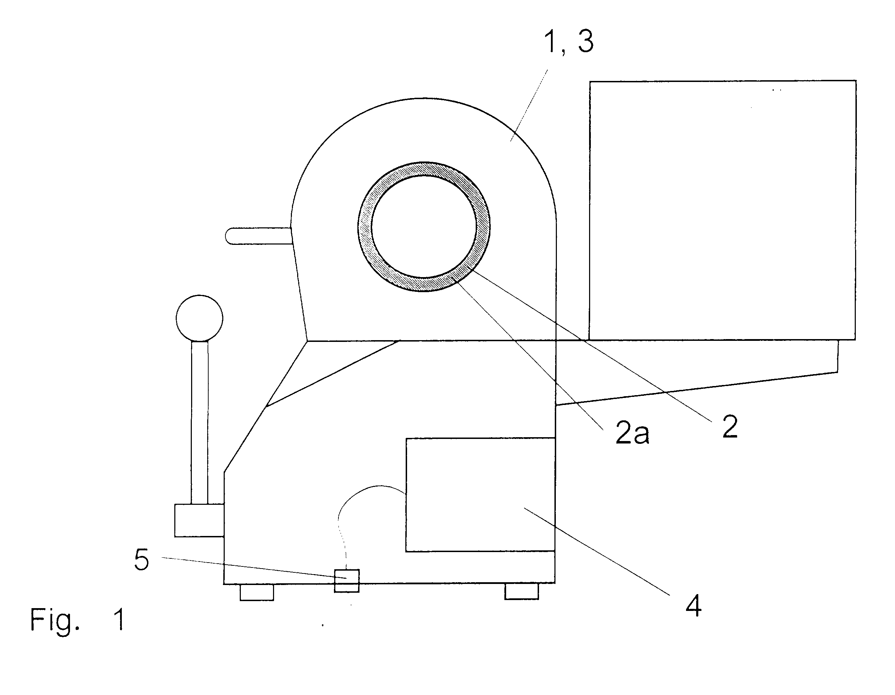

Die Figur 1 zeigt einen Schnitt durch die schematisch dargestellte Vorrichtung 1 zum Verschweissen von thermoplastischen Rohren entlang der Fügestelle der miteinander verbundenen Rohrenden 2. Die Verbindungsfläche ist mit 2a bezeichnet. Die Rohre sind in einer herkömmlichen Schweissmaschine je in eine Spannvorrichtung 3 eingespannt. Nach abgeschlossener Aufheizphase mittels einer zwischen die zu verbindenden Rohrenden einschwenkbare Heizplatte, (nicht gezeigt) werden die Rohrenden zusammengedrückt und die Abkühlphase eingeleitet. Ein Umgebungstemperatur-Sensor (RT-Sensor) 5 wird über eine Elektronikeinheit 4 zwecks Erfassung der Umgebungstemperatur aktiviert. Die Umgebungstemperatur RT wird laufend erfasst, und die Abkühlzeit wird gemäss der Formel t_{K} = f(T_{RT}) errechnet, wobei t_{K} die Abkühlzeit bedeutet und TRT für die Umgebungstemperatur steht. Die Berechnungsfaktoren berücksichtigen die kühlleistungsmässig ungünstige Variante mit statischer Raumluft.

Indem die Umgebungsluft als statisch angenommen wird, wird eine Materialfestigkeit in der Schweisszone sichergestellt, die weit über der Mindesffestigkeit des zulässigen Anwendungsbereiches der Rohrleitung liegt.

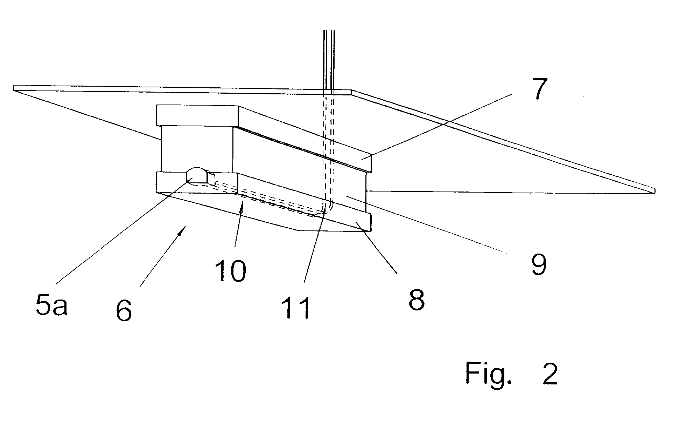

Die Figur 2 zeigt schematisch einen Temperatursensor 5a, der mittels eines Zwischenelements 6 an der Unterseite des Vorrichtungsgehäuses in einem von der Heizvorrichtung abgewandten Bereich angeordnet ist. Das Zwischenelement 6 besteht aus einer oberen Metallplatte 7 und einer unteren Metallplatte 8, welche mittels eines thermischen Isolators 9 miteinander verbunden sind. Als thermischer lsolator 9 wird ein Schaumstoff mit geschlossenen Mikrozellen, vorzugsweise ein Moosgummi, verwendet. Die untere Metallplatte 8 weist eine Ausnehmung 10 auf, in der der Temperatursensor 5a aufgenommen ist. Um eine Erwärmung des Sensors 5a über seine Anschlussleitungen 11 zu vermeiden, stehen die Anschlussleitungen 11 in thermischer Verbindung mit der unteren Metallplatte 8. Vorzugsweise ist dazu ein Kanal in die untere Metallplatte 8 eingelassen, in welchen die Anschlussleitungen 11 eingebettet werden können. Durch eine derartige Ausbildung erwärmt sich der Temperatursensor 5a auch im Dauerbetrieb der Vorrichtung nicht namhaft über die Raumtemperatur.

Die korrekte Funktionsweise des Temperatursensors 5a wird mittels der Elektronikeinheit 4 überwacht. Im Falle eines Defekts des Temperatursensors 5a erfolgt die Berechnung der Abkühlzeit auf der Basis des schlechtest möglichen Falls -hohe Umgebungstemperatur-. Gleichzeitig wird der Sensordefekt dem Benutzer angezeigt.

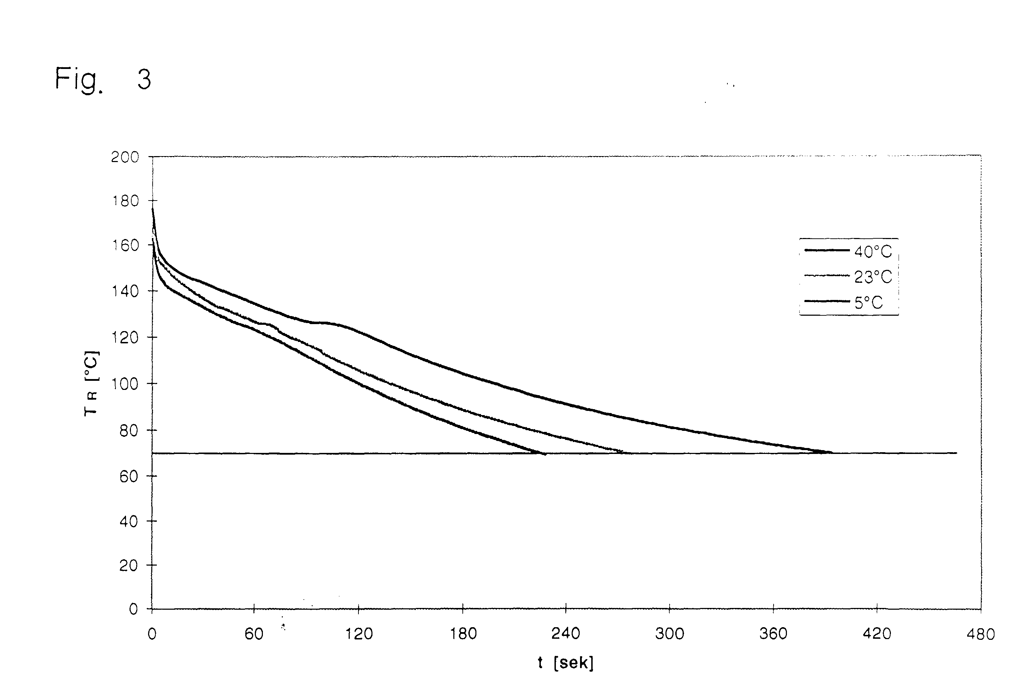

Aus der Figur 3 sind verschiedene Abkühlungskurven ersichtlich. Bei einer Raumtemperatur von 40°C ergibt sich eine Abkühlzeit von etwa 400 sec., bei 23°C ist die Materialfestigkeit bereits nach ca. 290 sec. erreicht und bei einer Umgebungstemperatur von 5°C ist der Abkühlungsvorgang nach ca. 230 sec. abgeschlossen.

## Patentansprüche

1. Vorrichtung (1) zum Verschweissen von Teilen aus thermoplastischem Kunststoff, mit einer die Teile in koaxialer Lage zueinander haltenden Spannvorrichtung (3), einer Heizvorrichtung zum Erwärmen der zu verschweissenden Teile, einer Elektronikeinheit (4) sowie einem Temperatursensor (5, 5a) zum Erfassen der Umgebungstemperatur, **dadurch gekennzeichnet**, dass der Temperatursensor (5, 5a) an der Vorrichtung (1) angeordnet und gegenüber letzterer thermisch isoliert ist.

2. Vorrichtung (1) nach Anspruch 1, dadurch gekennzeichnet, dass der Temperatursensor (5, 5a) in einem von der Heizvorrichtung abgewandten Bereich an der Vorrichtung (1) angeordnet ist.

3. Vorrichtung (1) nach Anspruch 1 oder 2, dadurch gekennzeichnet, dass ein Zwischenelement (6) zur Aufnahme des Temperatursensors (5a) vorgesehen ist, welches einen thermischen lsolator (9) und eine daran angeordnete Metallplatte (8) aufweist, wobei die Anschlussleitungen (11) des Temperatursensors (5a) in thermischer Verbindung mit der Metallplatte (8) stehen.

4. Vorrichtung (1) nach einem der vorhergehenden Ansprüche, dadurch gekennzeichnet, dass die Metallplatte (8) eine Ausnehmung aufweist, in der der Temperatursensor (5a) aufgenommen ist.

5. Vorrichtung (1) nach einem der vorhergehenden Ansprüche, dadurch gekennzeichnet, dass der Isolator (9) aus einem Schaumstoff mit geschlossenen Mikrozellen, vorzugsweise aus Moosgummi, besteht.

6. Vorrichtung (1) nach einem der vorhergehenden Ansprüche, dadurch gekennzeichnet, dass das Zwischenelement (6) eine weitere Metallplatte (7) aufweist, welche auf der der ersten Metallplatte (8) gegenüberliegenden Seite am Isolator (9) angeordnet ist und der Befestigung des Zwischenelements (6) an der Vorrichtung dient.

7. Verfahren zum Verschweissen von Teilen aus thermoplastischem Kunststoff mit einer nach einem der vorhergehenden Ansprüche ausgebildeten Vorrichtung, **dadurch gekennzeichnet,** dass die am Temperatursensor (5, 5a) anstehende Temperatur von der Elektronikeinheit (4) laufend erfasst und zur Ermittlung der Abkühlzeit der verschweissten Teile herangezogen wird.

8. Verfahren nach Anspruch 7, dadurch gekennzeichnet, dass die Temperatur der statischen Umgebungsluft erfasst wird.

9. Verfahren nach Anspruch 7 oder 8, dadurch gekennzeichnet, dass die Erwärmung der zu verschweissenden Teile mit Kontakt oder kontaktlos erfolgt.

10. Verfahren nach einem der Ansprüche 7 bis 9, dadurch gekennzeichnet, dass der Temperatursensor (5, 5a) mittels der Elektronikeinheit (4) im Hinblick auf einen Defekt überwacht wird, und dass, im Falle eines Defekts, die Berechnung der Abkühlzeit auf der Basis des schlechtest möglichen Falls erfolgt.

11. Verfahren nach Anspruch 10, dadurch gekennzeichnet, dass das Erkennen eines Sensordefekts dem Benutzer angezeigt wird.
